## Europäisches Patentamt

## European Patent Office

## Office européen des brevets

(11) Veröffentlichungsnummer: **0 053 235**
**A2**

(12) # EUROPÄISCHE PATENTANMELDUNG

(21) Anmeldenummer: 81107822.9

(22) Anmeldetag: 01.10.81

(51) Int. Cl.³: **H 04 N 1/41**

(30) Priorität: **28.11.80 DE 3044987**

(43) Veröffentlichungstag der Anmeldung: **09.06.82**
**Patentblatt 82/23**

(84) Benannte Vertragsstaaten: **FR NL**

(71) Anmelder: **SIEMENS AKTIENGESELLSCHAFT Berlin und München, Postfach 22 02 61, D-8000 München-22 (DE)**

(72) Erfinder: **Heinzl, Joachim, Dr. Prof., Dreisesselbergstrasse 16, D-8000 München 90 (DE)**
Erfinder: **von Borstel, Klaus Peter, Dipl.-Ing., Richard-Wagner-Strasse 21a, D-8023 Pullach (DE)**

(54) **Verfahren und Anordnung zum Darstellen von graphischen Mustern bei einer Faksimili-Ubertragung.**

(57) Die Helligkeitswerte eines auf einer Vorlage (V) angebrachten graphischen Musters werden vor einer Faksimileübertragung derart codiert, daß die signifikanten Eigenschaften des graphischen Musters erhalten bleiben, wenn die Darstellung in der empfangenden Station unter Verwendung eines Druckwerks erfolgt, dessen Druckelemente Punkte (P) gleicher Größe erzeugt. Die Anzahl der Abtastlinien (A), mit denen die Vorlage (V) abgetastet wird, ist größer als die Anzahl der aus den Punkten (P) gebildeten Linien (L). Aus jeweils einer Mehrzahl von Abtastsignalen wird ein einem Druckelement zugeführtes Drucksignal erzeugt.

SIEMENS AKTIENGESELLSCHAFT          VPA 80 P 8 0 5 8 E
Berlin und München


Verfahren und Anordnung zum Darstellen von graphischen
Mustern bei einer Faksimile-Übertragung

Die Erfindung bezieht sich auf ein Verfahren zum Darstellen von graphischen Mustern bei einer Faksimile-
Übertragung, bei dem in einer sendenden Station die
Helligkeitswerte von mit graphischen Mustern versehenen
Vorlagen längs paralleler Abtastlinien optoelektronisch
abgetastet werden, bei dem den abgetasteten Helligkeitswerten zugeordnete Signale zu einer empfangenden Station
übertragen werden und bei dem in der empfangenden Station
unter Verwendung der Signale das graphische Muster längs
paralleler Linien durch ein Druckwerk auf einem Aufzeichnungsträger dargestellt wird. Weiterhin bezieht sich die
Erfindung auf eine Anordnung zur Durchführung des Verfahrens.


Es sind bereits Faksimile-Geräte bekannt, bei denen eine
mit graphischen Mustern versehene Vorlage auf eine rotierende Trommel gespannt wird. Parallel zur Achse der
Trommel wird ein Abtastelement kontinuierlich verschoben,
so daß die Vorlage längs paralleler Abtastlinien abgetastet wird. Die Abtastsignale werden zur empfangenden
Station übertragen, wo auf einer ebenfalls rotierenden
Trommel ein Aufzeichnungsträger aufgespannt ist. In ähnlicher Weise wie das Abtastelement bei der sendenden
Station bewegt sich in der empfangenden Station das Druckwerk parallel zur Achse der Trommel, so daß das auf der
Vorlage aufgebrachte graphische Muster auf dem Aufzeichnungsträger linienweise wiedergegeben wird.


Es ist denkbar, mit Mosaikdruckwerken versehene Schreibstationen, die ursprünglich für eine Wiedergabe von alphanumerischen Zeichen vorgesehen waren, auch als Faksimile-

Ret 1 Kdg / 27. Nov. 1980

0053235

Geräte zu verwenden.

Die Mosaikdruckwerke sind entweder als Tinten- oder als Nadeldruckwerke ausgebildet. Derartige Druckwerke weisen eine Mehrzahl von Druckelementen auf, mit denen die empfangenen graphischen Muster gleichzeitig in mehreren Linien darstellbar sind.

Die Druckwerke erzeugen Punkte gleicher Größe und gleicher Schwärze in den Gitterpunkten eines festen Rasters. Der kleinste Abstand zwischen zwei aufeinanderfolgenden Punkten ist durch die höchste Punktfrequenz des Druckelementes bestimmt und wird als Schritt bezeichnet. Das Raster kann jedoch feiner sein als die Schritte, so daß der Abstand zwischen zwei benachbarten Gitterpunkten des Rasters einen Teilschritt beträgt. Eine ganzzahlige Anzahl von Teilschritten entspricht dann einem Schritt. Beispielsweise entsprechen bei einer Darstellung in einem Viertelschritt-Raster vier Viertelschritte einem Schritt. Von einem Druckelement kann nur dann ein Punkt erzeugt werden, wenn der von demselben Druckelement zuletzt erzeugte Punkt mindestens einen ganzen Schritt zurückliegt.

Vom Druckwerk können bei einer Darstellung in einem Viertelschritt-Raster in Druckrichtung Konturenunterschiede von einem Viertelschritt wiedergegeben werden. Ein derartiger Viertelschritt beträgt beispielsweise 0,09 mm. Etwa die gleiche Größe haben Lücken und Striche, die auf einer abzutastenden Vorlage gerade noch von Bedeutung sind. Falls eine Darstellung der graphischen Muster gewünscht wird, die den Faksimile-Geräten der Gruppe 2 entspricht, werden senkrecht zur Druckrichtung 3,8 Linien pro Millimeter gedruckt. Zwei benachbarte Druckelemente weisen damit einen Abstand von etwa drei Viertelschritten auf. Da ein Punkt einen Durchmesser von vier Viertelschritten hat, bedecken die Punkte einer

- 3 - VPA 80 P 8058 E

Linie auch teilweise die benachbarten Linien. Wegen der verhältnismäßig großen Punkte besteht die Gefahr, daß das darzustellende graphische Muster undeutlich wird und signifikante Eigenschaften nicht dargestellt werden können.

Der Erfindung liegt daher die Aufgabe zugrunde, ein Verfahren anzugeben, mit dessen Hilfe eine Darstellung von graphischen Mustern verbessert wird, wenn diese durch Punkte gleicher Größe und gleicher Schwärze mit Hilfe eines Mosaikdruckwerks dargestellt werden.

Erfindungsgemäß wird die Aufgabe bei dem Verfahren der eingangs genannten Art gelöst durch die zeitliche Aufeinanderfolge folgender Verfahrensschritte:

a) die Vorlage wird längs einer Anzahl von Abtastlinien abgetastet, die gleich ist einem Vielfachen der Anzahl der Linien bei der Wiedergabe,

b) die Vorlage wird längs der Abtastlinien in Abtastschritten abgetastet, die kleiner sind als der Durchmesser und/oder der Abstand von durch das Druckwerk darzustellenden Punkten,

c) für jede Abtastlinie und jeden Abtastschritt wird ein Abtastsignal erzeugt,

d) die Abtastsignale einer vorgegebenen Anzahl von Abtastlinien und einer vorgegebenen Anzahl von Abtastschritten werden gespeichert,

e) die Abtastsignale werden in die zu übertragenden Signale derart umgesetzt, daß das abgetastete graphische Muster durch eine geringere Anzahl von Linien dargestellt wird und daß dabei die signifikanten Eigenschaften des graphischen Musters erhalten bleiben,

f) unter Verwendung der übertragenen Signale wird das graphische Muster linienweise auf dem Aufzeichnungsträger durch das Druckwerk dargestellt.

- 4 -   VPA 80 P 8 0 5 8 E

Das Verfahren gemäß der Erfindung hat den Vorteil, daß es einen geringen Aufwand erfordert, da mit Hilfe einer geringfügig abgeänderten Schreibstation, bei der der Aufzeichnungsträger senkrecht zur Druckrichtung verschiebbar ist, eine Faksimile-Übertragung ermöglicht wird. Trotz der verhältnismäßig großen Punkte ist infolge der Verarbeitung der Abtastsignale vor der Übertragung eine sehr gute Darstellung der graphischen Muster möglich.

Die Umsetzung der Abtastsignale in die zu übertragenden Signale erfolgt zweckmäßigerweise dadurch, daß die Abtastsignale in die zu übertragenden Signale nach einem Vergleich von benachbarten Abtastsignalen umgesetzt werden.

Um die signifikanten Eigenschaften des graphischen Musters bei der Übertragung zu erhalten, ist es vorteilhaft, wenn die Abtastsignale von dünnen oder kontrastarmen Strichen in zu übertragende Signale umgesetzt werden, bei denen die Konturen des graphischen Musters bei der Darstellung erhalten bleiben.

Um zu verhindern, daß dünne horizontale Striche, die zwischen zwei benachbarten Linien liegen, entweder in beiden Linien oder in keiner Linie dargestellt werden, ist es vorteilhaft, wenn die Abtastsignale von zwischen den Linien liegenden Strichen in zu übertragende Signale umgesetzt werden, durch die die Striche nur durch ein Druckelement des Druckwerks dargestellt werden.

Für das Erkennen eines graphischen Musters ist es weiterhin vorteilhaft, wenn die Abtastsignale von voneinander getrennten graphischen Mustern in zu übertragende Signale umgesetzt werden, bei denen die Trennung der graphischen Muster bei der Darstellung erhalten bleibt.

Falls das Druckwerk die graphischen Muster in einem Viertelschrittraster darstellt, ist es für eine gleich gute Darstellung von waagerechten und senkrechten Strichen

oder Lücken günstig, wenn die Anzahl der Abtastlinien gleich ist der dreifachen Anzahl der Linien bei der Wiedergabe.

Falls die Darstellung der graphischen Muster in der empfangenden Station in Schritten erfolgt, die ganzzahlige Vielfache von Teilschritten sind, ist es vorteilhaft, wenn die Länge der Teilschritte gleich ist der Länge der Abtastschritte.

Eine vorteilhafte Anordnung zur Durchführung des Verfahrens ist dadurch gekennzeichnet, daß in der sendenden Station eine Abtaststufe vorgesehen ist, die für jede Linie bei der Wiedergabe eine Mehrzahl von Abtastelementen enthält, daß der Abtaststufe ein Speicher nachgeschaltet ist, in dem die Abtastsignale speicherbar sind, daß dem Speicher eine Auswertestufe nachgeschaltet ist, die den Abtastsignalen die zu übertragenden Signale zuordnet und daß in der empfangenden Station ein Druckwerk vorgesehen ist, das Punkte konstanter Größe erzeugt, deren Anzahl und Abstände durch die zu übertragenden Signale festgelegt werden.

Falls die Abtaststufe gleichzeitig mehrere Linien abtastet und das Druckwerk gleichzeitig die Punkte von mehreren Linien druckt, ist es für eine Zusammenarbeit mit üblichen Faksimilegeräten zweckmäßig, wenn dem Druckwerk ein Zwischenspeicher vorgeschaltet ist, in dem die einer Mehrzahl von Linien zugeordneten Signale zwischenspeicherbar sind.

Eine besonders vorteilhafte Ausführungsform der Anordnung wird erreicht, wenn als Druckwerk ein Tintendruckwerk vorgesehen ist.

Im folgenden wird eine Durchführung des Verfahrens anhand von Zeichnungen näher erläutert. Es zeigen:

- 6 -   VPA 80 P 8 0 5 8 E

Fig. 1 eine bei der Abtastung einer Vorlage auszuwertende Fläche,

Fig. 2 bis Fig. 4 Darstellungen von verschiedenen graphischen Mustern, bei denen der Abdruck eines Punktes erfolgt,

Fig. 5 ein Blockschaltbild einer Anordnung zur Durchführung des Verfahrens.

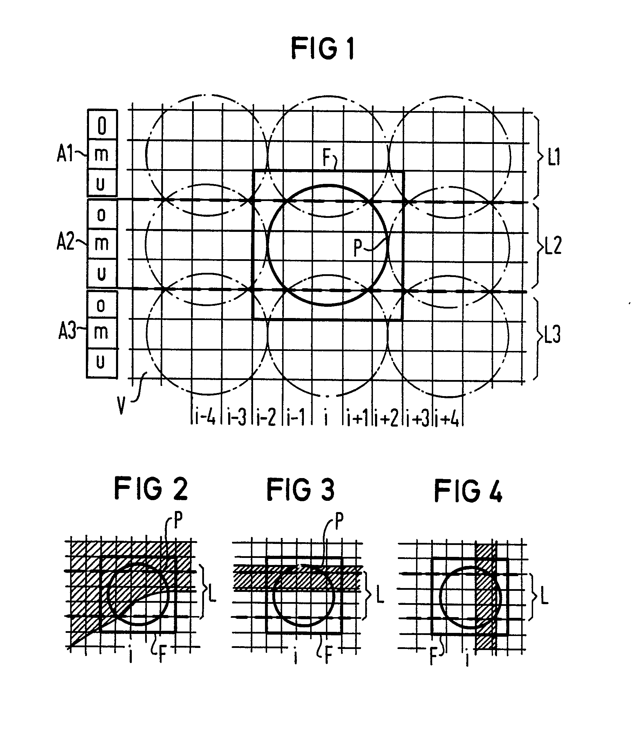

Bei der Darstellung in Figur 1 sind neun Abtastlinien dargestellt, längs denen eine mit einem graphischen Muster versehene Vorlage optoelektronisch abgetastet wird. Jeweils drei Abtastlinien sind einer Linie L bei der Wiedergabe zugeordnet. Jeweils einer Linie ist beispielsweise eine Abtasteinrichtung A1, A2 oder A3 zugeordnet, die jeweils drei Abtastelemente o, m und u enthalten. Längs der Abtastlinien wird die Vorlage in Abtastschritten i abgetastet, die vorzugsweise den Teilschritten bei einer schrittweisen Wiedergabe entsprechen. Die Wiedergabe erfolgt durch Punkte P, die alle die gleiche Größe haben. Die Punkte haben einen Durchmesser von vier Viertelschritten. Der kleinste Abstand ihrer Mittelpunkte in horizontaler Richtung beträgt ebenfalls vier Viertelschritte, was einem ganzen Schritt entspricht. In vertikaler Richtung weisen die Mittelpunkte der Punkte P einen kleinsten Abstand von drei Viertelschritten auf. Bei der Abtastung der Vorlage erzeugen die Abtasteinrichtungen A1 bis A3 Abtastsignale, die die Helligkeitswerte der Vorlage darstellen. Diese Helligkeitswerte einer Mehrzahl von Abtastlinien und einer Mehrzahl von Abtastschritten werden in einem Speicher gespeichert. Da mehr Abtastlinien vorhanden sind als Linien L bei der Wiedergabe, werden die gespeicherten Abtastsignale in Signale umgesetzt, die eine möglichst genaue Wiedergabe der abgetasteten graphischen Muster ermöglichen. Diese Signale werden zur empfangenden Station übertragen und für die Darstellung einem dortigen Druckwerk zugeführt.

Für die Umsetzung der Abtastsignale in die zu übertragenden Signale wird auf der Vorlage für jeden Viertelschritt i eine Fläche F ausgewertet, die in vertikaler
Richtung fünf Abtastlinien und in horizontaler Richtung
fünf Abtastschritte umfaßt. In Abhängigkeit von der Verteilung der Helligkeitswerte in der Fläche wird ein Signal erzeugt, das in der empfangenden Station den Abdruck
eines Punktes P bewirkt oder nicht.

Grundsätzlich ist der Abdruck eines Punktes P bei der
Darstellung in einem Viertelschrittraster nur dann möglich, wenn der Abstand zu einem vom selben Druckelement
erzeugten Punkt P in derselben Linie L mindestens einen
Schritt, d.h. vier Viertelschritte, beträgt. Wenn durch
die Abtastelemente Punkte des graphischen Musters erkannt werden, die so groß sind wie ein Punkt P, kann
dieser unmittelbar wiedergegeben werden. Kleinere Punkte
des graphischen Musters müssen als solche erkannt werden.
Es genügt damit, die abgetasteten Helligkeiten einer
Fläche F, die sowohl horizontal als auch vertikal etwas
größer ist als der Punkt P, zu überprüfen. Der Helligkeitsvergleich erfolgt für jedes Schreibelement während
jedes Teilschrittes i. Jedes Abtastelement A erzeugt
in jedem Viertelschritt einen Helligkeitswert. Die
Fläche F besteht somit aus einer ganzen Zahl von Feldern,
die einen Viertelschritt breit und einen Viertelschritt
hoch sind. Im dargestellten Beispiel sind somit jedem
Druckelement während jedes Teilschritts i 25 Helligkeitswerte zugeordnet. Durch einen Vergleich der Helligkeitswerte wird in der Auswertestufe ermittelt, ob zum Teilschritt i in der empfangenden Station ein Punkt P dargestellt werden soll oder nicht.

Wie in Figur 2 dargestellt ist, wird ein Punkt P an
der Stelle i nach einem ganzen Schritt immer dann dargestellt, wenn mindestens 9 zusammenhängende Felder der
Fläche F, von denen mindestens 6 zur Linie L gehören,

OC53235

den Schwarzwert anzeigen. Ausnahmsweise wird der Druck des Punktes P verhindert, wenn zu breite waagerechte Striche verhindert werden sollen oder wenn kleine Zwischenräume erkannt werden sollen.

Wie in Figur 3 dargestellt ist, wird im Viertelschritt i ein Punkt auch dann dargestellt, wenn mindestens eines der drei zu einer Linie L gehörenden Abtastelemente über alle fünf Positionen Grau- oder Schwarzwerte abgetastet hat und wenn mindestens eines der beiden angrenzenden, entweder zur gleichen oder zur benachbarten Linie gehörenden Abtastelemente hellere Werte abtastet. Ausnahmsweise wird auch hier die Darstellung eines Punktes P unterbunden, wenn die Gefahr besteht, daß waagerechte Striche zwischen den Linien zu breit dargestellt werden würden.

Wie in Figur 4 dargestellt ist, wird ein Punkt P beim Viertelschritt i auch dann abgedruckt, wenn mindestens zwei nebeneinanderliegende, zu der Linie L gehörende Abtastelemente in der Position i+2 oder in den Positionen i+1 und i+2 hellere Werte abgetastet haben als das mittlere Abtastelement Am in der Position i und mindestens fünf zusammenhängende Felder, die entweder alle fünf Positionen oder alle fünf Abtastelemente überstreichen, den gleichen Helligkeitswert wie das zentrale Feld Am beim Teilschritt i anzeigen. In diesem Fall werden senkrecht oder schräg verlaufende dünne oder kontrastarme Striche gefunden.

Da bei der Darstellung der Linie L2 auch Helligkeitswerte berücksichtigt werden, die von Abtastelementen der Linien L1 und L2 stammen, muß bei der Abtasteinrichtung für den oberen und den unteren Rand jeweils ein zusätzliches Abtastelement vorgesehen werden, so daß z.B. bei 6 Linien L 20 Abtastelemente gebraucht werden.

In Abtastrichtung verlaufende, horizontale Striche können nicht in beliebiger Stärke und Lage, sondern nur in ganzzahligen Vielfachen der Strichstärke eines Druckelementes längs der Linien L dargestellt werden. Die Auswertestufe muß daher die Strichstärke abstufen, ohne daß eine unnötige Verbreiterung des Striches auftritt. Eine solche Verbreiterung würde beispielsweise dann auftreten, wenn ein dünner Strich zwischen zwei Linien L liegt und beide Schreibelemente Punkte P erzeugen würden. Die Auswertestufe unterdrückt in diesem Ausnahmefall die Darstellung von Punkten in einer der beiden Linien. Ebenfalls wird eine Punktdarstellung in L2 unterdrückt, wenn weniger als 23 zur Linie L2 und den beiden benachbarten Linien L1 und L3 zugehörige Felder den Schwarzwert anzeigen und die Anzahl der schwarzen Felder der Nachbarlinien größer ist als die der zur Linie L2 gehörenden Felder und außerdem das an das gegenüberliegende Nachbardruckelement angrenzende Abtastelement A1u oder A3o über alle fünf Positionen hellere Werte als Schwarz abgetastet hat. Wenn die Zahl der schwarzen Felder bei den Linien L2 und L1 oder L3 gleich groß ist, dann wird der Punktbefehl bei dem Druckelement aufgehoben, das für diesen Fall vorher dazu bestimmt wurde. Dies sind beispielsweise die Druckelemente mit geraden Nummern.

Wie im Zusammenhang mit Figur 3 bereits erwähnt wurde, wird ein Punkt P auch dann nicht gedruckt, obwohl die zum Druck erforderliche Bedingung durch eins der am Rande liegenden Abtastelemente Ao oder Au, jedoch nicht durch das mittige Abtastelement Am, erfüllt ist, aber für die angrenzende Linie L1 oder L3 ebenfalls die Bedingung durch A1u oder A3o erfüllt ist und mehr Felder gleiche oder geringere Helligkeitswerte als für die Linie L2 anzeigen.

Zwischenräume zwischen Buchstaben oder auch innerhalb eines Buchstabens sind manchmal so gering, daß sie auf dem Aufzeichnungsträger wegen der Größe eines Punktes P verschwinden würden. Wenn von allen Abtastelementen, die der Linie L2 zugeordnet sind, eine Lücke von 1 bis 3 Viertelschritten zwischen senkrecht verlaufenden Konturen festgestellt wird, verzögert die Auswertestufe den ersten Punktbefehl nach der Lücke soweit, daß diese erhalten bleibt. Bei Lücken zwischen waagerechten Konturen greift die Auswertestufe nur dann ein, wenn nur eines von den zu der Linie L2 zugehörigen Abtastelementen eine über wenigstens drei Viertelschritte gehende Lücke entdeckt.

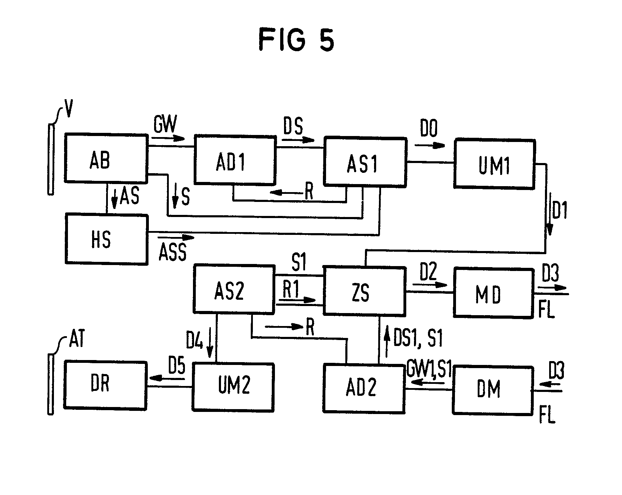

Die in Figur 5 dargestellte Abtaststufe AB tastet eine Vorlage V auf mehreren parallelen Abtastlinien gleichzeitig ab. Die Abtaststufe AB enthält beispielsweise mehrere Abtasteinrichtungen A, mit jeweils drei Abtastelementen Ao, Am und Au. Die Anzahl der Abtasteinrichtungen A ist beispielsweise gleich der Anzahl der Druckelemente des entsprechenden Druckwerks DR, das Punkte P auf einen Aufzeichnungsträger AT druckt. Die Abtaststufe AB gibt die Grauwertsignale jedes Abtastelementes an eine Addierstufe AD1. Die Grauwertsignale GW sind zweckmäßigerweise digitale Signale. In diesem Fall ist in der Abtaststufe AB ein Analog-Digitalwandler vorgesehen. Die Addierstufe AD1 addiert die Grauwertsignale GW für jede Abtastlinie gesondert. Beim Überschreiten eines Schwellenwertes gibt die Addierstufe AD1 ein Drucksignal DS an eine Auswertestufe A1 ab und vermindert die Summe um den Schwellenwert. Die der Addierstufe AD1 nachgeschaltete Auswertestufe AS1 prüft, ob die den einzelnen Linien L zugeordneten Summen gleichmäßig anwachsen. Wenn dies der Fall ist, werden je nach Linie L verschiedene konstante Werte an die Addierstufe AD1 abgegeben und zu den jeweiligen Summen hinzuaddiert, um eine fälschliche Wiedergabe eines Halbtons durch senkrechte Striche zu vermeiden.

0053235

Wenn ein Abtastelement einen Schwarzwert unmittelbar erkennt, gibt die Abtaststufe AB ein Schwarzsignal S an die Auswertestufe AS1 und diese löst zum geeigneten Zeitpunkt einen Druckbefehl aus. Die Grauwerte GW sind Mittelwerte über die Helligkeitswerte, die von den jeweils drei Abtastelementen einer Abtasteinrichtung A ermittelt werden. Die Helligkeitswerte selbst werden als Abtastsignale AS einem Speicher HS zugeführt. Dieser speichert die Abtastsignale AS von jeweils drei Abtastlinien einer Linie L und den jeweils benachbarten Abtastlinien während fünf Teilschritten i-2 bis i+2. Der Speicher HS gibt die gespeicherten Abtastsignale AS als Signale ASS an die Auswertestufe AS1 ab. Diese prüft, welche Druckelemente in der gerade vorliegenden Position Punkte P darstellen dürfen. Hierzu muß berücksichtigt werden, daß der letzte Punktbefehl mindestens einen ganzen Schritt zurückliegt. Für diejenigen Druckelemente, die Punkte P darstellen dürfen und für die gerade ein Schwarzsignal S von der Abtaststufe AB oder von der Addierstufe AD1 ansteht, gibt sie einen Punktbefehl weiter, sofern nicht der von ihr vorgenommene Vergleich der Helligkeitswerte der umliegenden Positionen und Druckelemente eine Unterdrückung oder Verschiebung des Punktbefehls zur Verbesserung der Wiedergabequalität ergeben hat.

Die Auswertestufe AS1 gibt nach der Verarbeitung der Abtastsignale AS, der Grauwertsignale GW und der Schwarzwertsignale S Drucksignale DO an einen Umsetzter UM1 ab. Dieser erzeugt entsprechende Drucksignale D1. Ein der- artiger Umsetzter UM1 ist bekannt und beispielsweise in der DE-OS 27 48 289 beschrieben. Die vom Umsetzter UM1 erzeugten Drucksignale D1 werden an einen Zwischenspeicher ZS abgegeben. In diesem werden die Drucksignale D1 aller gleichzeitig abgetasteten Linien L parallel gespeichert. Anschließend werden sie seriell ausgelesen und als Drucksignale D2 einem Modulator MD zugeführt.

C053235

Der Modulator MD setzt die Drucksignale D2 in modulierte
Drucksignale D3 um und gibt sie an eine Fernleitung FL
ab. Die Drucksignale D3 sind derart ausgebildet, daß
sie von nach den CCITT-Empfehlungen der Gruppe 2
arbeitenden Faksimile-Geräten empfangen werden können.

Die Signale D3 gelangen über die Fernleitung FL in der
empfangenden Station zu dem Demodulator DM, der Grauwertsignale GW1 und Schwarzwertsignale S1 an eine der
Addierstufe AD1 entsprechende Addierstufe AD2 abgibt.
Die Schwarzwertsignale S1 und die durch Summation entstandenen Drucksignale DS1 werden seriell in den
Zwischenspeicher ZS eingespeichert. Anschließend werden
sie an eine Auswertestufe AS2 abgegeben, die der Auswertestufe AS1 entspricht. Die Auswertestufe AS2 prüft
außerdem, ob die Schwarzwerte S1 als codierte Druckbefehle zulässig sind. Beispielsweise wird geprüft, ob
bei einer Darstellung in einem Viertelschrittraster der
Abstand von zwei Punkten dem Abstand von vier Viertelschritten entspricht. Die Drucksignale werden als Signale D4 an einen Umsetzer UM2 abgegeben, der die Drucksignale D4 decodiert und entsprechend den Drucksignalen
D5 an das Druckwerk DR abgibt.

10 Patentansprüche
5 Figuren

0053235

- 13 -  VPA 81 P 8058 E

<u>Patentansprüche</u>

1. Verfahren zum Darstellen von graphischen Mustern bei einer Faksimile-Übertragung, bei dem in einer sendenden Station die Helligkeitswerte einer mit graphischen Mustern versehenen Vorlage längs paralleler Abtastlinien optoelektronisch abgetastet werden, bei dem den abgetasteten Helligkeitswerten zugeordnete Signale zu einer empfangenden Station übertragen werden und bei dem in der empfangenden Station unter Verwendung der Signale das graphische Muster längs paralleler Linien durch ein Druckwerk auf einem Aufzeichnungsträger dargestellt wird, g e k e n n z e i c h n e t   d u r c h die zeitliche Aufeinanderfolge folgender Verfahrensschritte:

a) die Vorlage (V) wird längs einer Anzahl von Abtastlinien abgetastet, die gleich ist einem Vielfachen der Anzahl der Linien (L) bei der Wiedergabe,

b) die Vorlage (V) wird längs der Abtastlinien in Abtastschritten abgetastet, die kleiner sind als der Durchmesser und/oder der Abstand von durch das Druckwerk (DR) darzustellenden Punkten (P),

c) für jede Abtastlinie und jeden Abtastschritt wird ein Abtastsignal (AS) erzeugt,

d) die Abtastsignale (AS) einer vorgegebenen Anzahl von Abtastlinien und einer vorgegebenen Anzahl von Abtastschritten werden gespeichert,

e) die Abtastsignale (AS) werden in die zu übertragenden Signale (D3) derart umgesetzt, daß das abgetastete graphische Muster durch eine geringere Anzahl von Linien (L) dargestellt wird und daß die signifikanten Eigenschaften des graphischen Musters erhalten bleiben,

f) unter Verwendung der übertragenen Signale (D) wird das graphische Muster linienweise auf dem Aufzeichnungsträger (AT) durch das Druckwerk (DR) dargestellt.

0053235

2. Verfahren nach Anspruch 1,
d a d u r c h   g e k e n n z e i c h n e t ,
daß die Abtastsignale in die zu übertragenden Signale (D)
nach einem Vergleich von benachbarten Abtastsignalen (ASS)
umgesetzt werden.

3. Verfahren nach Anspruch 1 oder Anspruch 2,
d a d u r c h   g e k e n n z e i c h n e t ,
daß die Abtastsignale (AS) von dünnen oder kontrastarmen Strichen in zu übertragende Signale (D) umgesetzt
werden, bei denen die Konturen des graphischen Musters
bei der Darstellung erhalten bleiben.

4. Verfahren nach einem der Ansprüche 1bis 3,
d a d u r c h   g e k e n n z e i c h n e t ,
daß die Abtastsignale (AS) von zwischen den Linien (L)
liegenden Strichen in zu übertragende Signale (D) umgesetzt werden, durch die die Striche nur durch ein Druckelement des Druckwerks (DR) dargestellt werden.

5. Verfahren nach einem der Ansprüche 1 bis 4,
d a d u r c h   g e k e n n z e i c h n e t ,
daß die Abtastsignale (AS) von voneinander getrennten
graphischen Mustern in zu übertragende Signale (D) umgesetzt werden, bei denen die Trennung der graphischen
Muster bei der Darstellung erhalten bleibt.

6. Verfahren nach einem der Ansprüche 1 bis 5,
d a d u r c h   g e k e n n z e i c h n e t ,
daß die Anzahl der Abtastlinien gleich ist der dreifachen Anzahl der Linien (L) bei der Wiedergabe.

7. Verfahren nach einem der Ansprüche 1 bis 6,
d a d u r c h   g e k e n n z e i c h n e t ,
daß die Darstellung des graphischen Musters in der
empfangenden Station in Schritten erfolgt, die ganzzahlige Vielfache von Teilschritten sind und daß die
Länge der Teilschritte gleich ist der Länge der Abtastschritte.

0053235

8. Anordnung zur Durchführung des Verfahrens nach Anspruch 1,

d a d u r c h   g e k e n n z e i c h n e t ,
daß in der sendenden Station eine Abtaststufe (AB) vorgesehen ist, die für jede Linie (L) bei der Wiedergabe eine Mehrzahl von Abtastelementen (Ao, Am, Au) enthält, daß der Abtaststufe (AB) ein Speicher (HS) nachgeschaltet ist, in dem die Abtastsignale (AS) speicherbar sind, daß dem Speicher (HS) eine Auswertestufe (AS1) nachgeschaltet ist, die den Abtastsignalen (AS) die zu übertragenden Signale (D) zuordnet und daß in der empfangenden Station ein Druckwerk (DR) vorgesehen ist, das Punkte (P) konstanter Größe erzeugt, deren Anzahl und Abstände durch die zu übertragenden Signale (D) festgelegt werden.

9. Anordnung nach Anspruch 1,
d a d u r c h   g e k e n n z e i c h n e t ,
daß einem modulierte Sendesignale erzeugenden Modulator (MD) und dem Druckwerk (DR) ein Zwischenspeicher (ZS) vorgeschaltet ist, in dem die einer Mehrzahl von Linien (L) zugeordneten, übertragenen Signale (D) zwischenspeicherbar sind und mittels dem eine Parallel/Serienumsetzung bzw. Serien/Parallelumsetzung erfolgt.

10. Anordnung nach Anspruch 8 oder Anspruch 9,
d a d u r c h   g e k e n n z e i c h n e t ,
daß als Druckwerk (DR) ein Tintendruckwerk vorgesehen ist.

FIG 1

FIG 2  FIG 3  FIG 4

0053235

# FIG 5